# EUROPÄISCHE PATENTSCHRIFT

(11) **EP 0 652 995 B1**
(45) Veröffentlichungstag und Bekanntmachung des Hinweises auf die Patenterteilung: **19.08.1998**
(21) Anmeldenummer: 93912607.4
(22) Anmeldetag: 23.06.1993
(51) Int. Cl.: E01B 1/00

(54) **VORRICHTUNG ZUR EXTRUSION UND GLÄTTUNG VON KUNSTSTOFFOLIEN**
DEVICE FOR EXTRUDING AND SMOOTHING PLASTIC FOILS
DISPOSITIF D'EXTRUSION ET DE LISSAGE DE FEUILLES EN MATIERE PLASTIQUE

(30) Priorität: 25.06.1992 DE 4220839
(43) Veröffentlichungstag der Anmeldung: 17.05.1995
(73) Patentinhaber: GROSS, Heinz, Dr.-Ing., D-64380 Rossdorf (DE)
(72) Erfinder: GROSS, Heinz, D-64380 Rossdorf (DE); MEIER-KAISER, Michael, D-6102 Pfungstadt (DE)
(74) Vertreter: Katscher, Helmut, Dipl.-Ing.
(86) Internationale Anmeldenummer: DE9300540
(87) Internationale Veröffentlichungsnummer: WO9400285

(56) Entgegenhaltungen:
- EP-A- 0 410 852
- EP-A- 0 429 161
- FR-A- 2 673 141
- US-A- 3 758 657
- US-A- 4 372 736
- US-A- 4 810 179

## Beschreibung

Die Erfindung betrifft eine Vorrichtung zur Extrusion und Glättung von Kunststoffolien, enthaltend
A) einen Extruder zur Extrusion von thermoplastischen Kunststoffen,
B) eine daran angeschlossene Breitschlitzdüse und
C) ein Walzenglättwerk, das zur Aufnahme der extrudierten Folienbahn wenigstens zwei einen Walzenspalt bildende Glättwalzen enthält.

Prinzipiell muß man in der Folienherstellung zwischen dem Kalanderverfahren und dem Glättverfahren unterscheiden. Bei einer bekannten, nach dem Kalanderverfahren arbeitenden Vorrichtung (US-A-4 372 736) wird in seiner Geometrie wenig definierter, in aller Regel dicker Schmelzestrang mit einer geringen Breite zu einer breiten Folie mit geringer Dicke regelrecht ausgewalzt. Für dieses Auswalzen werden größere Kräfte benötigt. Kalander arbeiten aus diesem Grund mit Linienspaltkräften im Bereich >5000 N/cm. Zur Aufbringung dieser Kräfte werden in der Regel auch hydraulisch arbeitende Zuhaltesysteme verwendet. Zum Antrieb der Walzen werden folglich auch sehr starke Motoren und zur Übertragung der Drehmomente auch sehr starke Antriebsverbindungen benötigt. Hauptaufgabe des Kalanders ist es nämlich, die Geometrie des Aufgabegutes zu verändern. Zwangsläufig und auch gewünschtermaßen werden bei diesem Auseinanderwalzen des Stranges natürlich auch die Produktoberflächen geglättet, was in der Regel aber erst in den dem eigentlichen Kalanderspalt nachgeschalteten Glättspalten erfolgt. Kalander eignen sich nur für die Verarbeitung von PVC mit seinem stoffspezifischen Materialverhalten.

Bei der Folienherstellung mit einem Glättwerk hingegen wird die Folie in das Glättwerk bereits in der Geometrie eingespeist, die man auch am Ende des Prozesses erreichen will. So ist ein Folienglättprozeß unter anderem dadurch gekennzeichnet, daß die Breite der in das Glättwerk eingespeisten Folienbahn durch den Glättprozeß nicht verändert wird. Dem Glättwerk muß folglich eine Breitschlitzdüse vorgelagert werden, in der das passiert, was die eigentliche Aufgabe des Kalanders ist, nämlich die aus dem Extruder in Strangform austretende Schmelze in die Geometrie der Folie zu überführen. Zur Extrusion und beidseitigen Glättung von Kunststoffolien mit einem Glättwerk sind somit Vorrichtungen gebräuchlich, die einen Extruder zur Extrusion von thermoplastischen Kunststoffen, eine daran angeschlossene Breitschlitzdüse und ein Walzenglättwerk zur Aufnahme der extrudierten Bahn zwischen wenigstens zwei Glättwalzen, die einen Walzenspalt bilden, enthalten. Bei der Herstellung von Kunststoffplatten und mehr als o,5 mm dicken Kunststoffolien läßt sich eine gleichbleibende Dicke der Kunststoffbahn sicher einhalten, wenn stets ein kleiner "Vorrat" der Kunststoffschmelze in Form eines Wulstes vor dem Walzenspalt gehalten und stetig herausgedrängt wird. Dadurch bleibt der Walzenspalt ständig exakt gefüllt. Bei der Abkühlung und Erstarrung entstehen im Walzenspalt vollkommen geglättete Bahnoberflächen, während der Kern der Bahn erst nach dem Durchtritt durch den Walzenspalt bei fortschreitender Abkühlung erstarrt. Man braucht über die Steuerung der Extruderdrehzahl nur dafür zu sorgen, daß der Wulst über eine längere Zeit eine etwa gleichbleibende Größe behält.

Dagegen erstarren dünne Folienbahnen schon im engsten Bereich des Walzenspaltes bereits über ihre gesamte Dicke und sind dann nicht mehr thermoplastisch formbar. Der Formmassewulst vor dem Walzenspalt muß auf einer minimalen Größe gehalten werden. Die Glättung der Folienoberfläche läßt sich nur durch hohe Zuhaltekräfte erreichen, die zur Durchbiegung der Walzen führen. Diese Durchbiegung läßt sich im voraus durch entsprechend bombierte Walzen ausgleichen, jedoch tritt dieser Ausgleich nur an einem ganz bestimmten Betriebspunkt ein. Außerhalb dieses Betriebspunktes sind Unterschiede der Spaltweiten zwischen dem Mittel- und dem Randbereich unvermeidlich, was entsprechende Unterschiede in der resultierenden Foliendicke zur Folge hat.

Bei einer Zunahme der Wulstdicke tritt eine extrem hohe Spaltkraft im Walzenspalt auf. Schwankungen in der Spaltweite und der dort auftretenden Spaltkräfte kommen auch durch unvermeidbare Rundlaufabweichungen der Walzen zustande. Extrusionsbedingte lokale Dickstellen in der extrudierten Bahn können zu derartig hohen lokalen Flächenpressungen führen, daß die Walzenoberflächen bleibend deformiert werden. Um diese Probleme zu vermeiden, setzt man auch teilweise lackierte Gummiwalzen als Gegenwalze zu einer Glättwalze aus Stahl ein, jedoch ist die Lackoberfläche sehr empfindlich, weshalb sie in der Regel keine langen Betriebszeiten erreicht.

Die Extrusion und Glättung dünner Kunststoffolien ist daher nur bei sorgfältigster Einhaltung gleichbleibender Produktionsbedingungen, vor allem durch die Verwendung einer Breitschlitzdüse mit verstellbarer Austrittslippe, einer sog. "Flexlippe", beherrschbar. Trotzdem treten in der Praxis immer wieder Abweichungen oder Störungen auf, die häufig zu einer Beschädigung der Walzenoberflächen durch extreme Drücke im Glättspalt führen.

Der Erfindung liegt daher die Aufgabe zugrunde, eine Vorrichtung zur Extrusion von Kunststoffolien, enthaltend
A) einen Extruder zur Extrusion von thermoplastischen Kunststoffen,
B) eine daran angeschlossene Breitschlitzdüse und
C) ein Walzenglättwerk, das zur Aufnahme der extrudierten Folienbahn wenigstens zwei einen Walzenspalt bildende Glättwalzen enthält,
so zu verbessern, daß geglättete Folien damit herstellbar sind, ohne daß hohe Spaltkräfte und die damit verbundenen Probleme auftreten.

Diese Aufgabe wird erfindungsgemäß dadurch gelöst, daß wenigstens eine Walze des Glättwerks auf den Seitenschildern des Glättwerks nahezu reibungsfrei verschiebbar gelagert ist und daß sie senkrecht zur Berührungsebene des Walzenspalts unter Veränderung des Achsabstands zur der anderen Walze federnd angeordnet ist.

Vorteilhafte Ausgestaltungen des Erfindungsgedankens bestehen darin, daß die Spaltkraft in einem von der Verschiebung der Achsen unabhängigen Schwankungsbereich von +- 20 % liegt, bei dem die Spaltkraft etwa gleichbleibend eingestellt ist, bei dem die auf die Spaltlänge bezogene Spaltkraft P1 einen Wert bis 100 N/cm besitzt und bei dem die Spaltkraft einstellbar ist. Dadurch wird die Linienkraft mit der die Walzen des Glättwerkes im Walzenspalt gegeneinander wirken, auf eine Größe begrenzt, bei der. keine Beschädigung der Walzenoberfläche mehr eintritt.

Es wurde festgestellt, daß es mit den heutigen extrem verbesserten technischen Möglichkeiten der Reduzierung der aus der Extrusionsdüse austretenden Dickenschwankungen über der Breite der Schmelzebahn nicht mehr erforderlich ist, Dickenschwankungen im Glättwerk mit hohen Zuhaltekräften der Walzen zu eliminieren. Das Konzept mit hohen Linienkräften im Glättspalt, wie es zur Zeit Stand der Technik ist, stößt bei extrem dünnen Folien an seine Grenzen. Versuche haben gezeigt, daß eine mit nahezu konstanter Dicke in den Glättspalt einlaufende Schmelzebahn zur vollständigen Glättung der Oberfläche keine hohen Linienkräfte benötigt. Damit kann man zur Glättung von Folien auch Walzen mit einem Durchmesser von <200 mm benutzen, was, wie die Versuche gezeigt haben, der Glättung von extrem dünnen Schmelzebahnen sehr entgegen kommt, da man bei kleinen Walzendurchmessern dem Ideal der linienförmigen Berührung zwischen Schmelzebahn und wenigstens einer Glättwalze im engsten Punkte des Glättspaltes sehr nahe kommt.

Daher ist es nicht erforderlich, das Walzenglättwerk zur Aufnahme hoher Linienkräfte auszurüsten. Die noch verbleibenden Dickenschwankungen werden durch Ausweichbewegungen der den Walzenspalt bildenden Walzen ebenso aufgefangen wie Rundlaufabweichungen der Walzen. Da die Spaltkraft auf einen Höchstwert begrenzt und vorzugsweise weitgehend konstant ist, wird bei jeder Achsenstellung der verschiebbaren Walze die gleiche Glättwirkung erzielt.

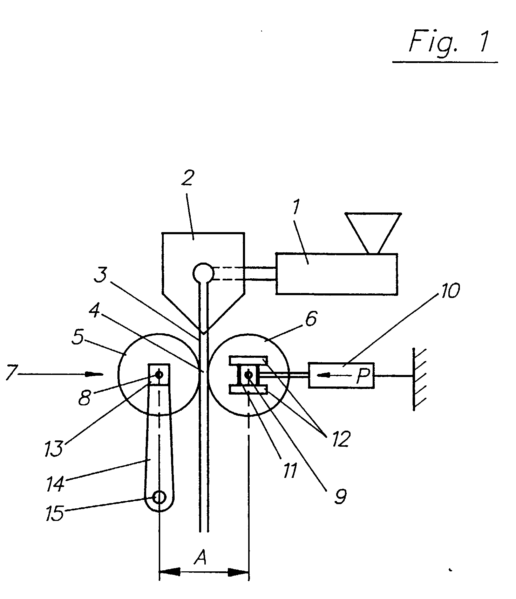

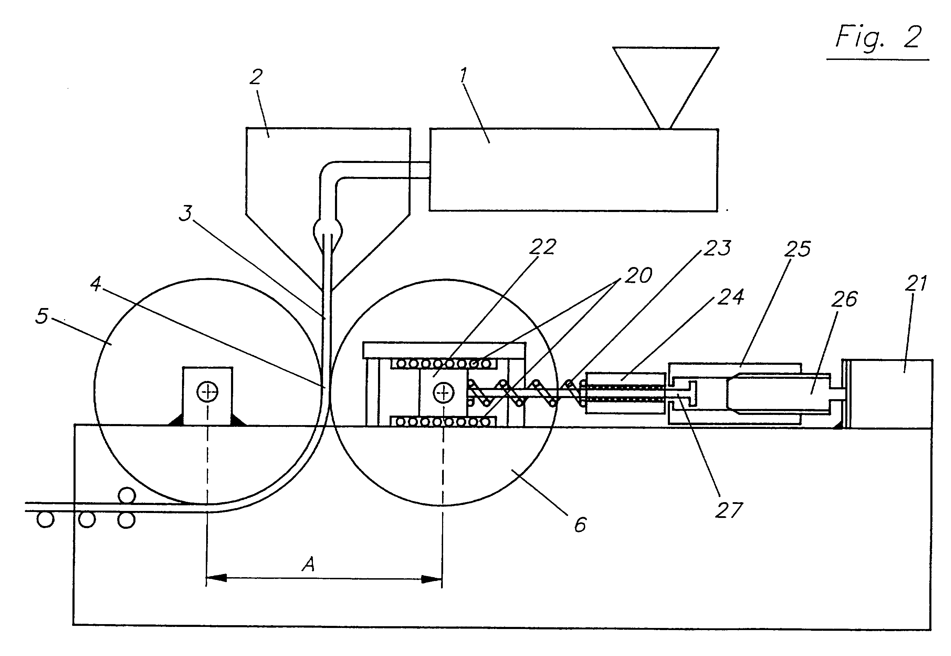

Zur Erläuterung der Erfindung dienen die Figuren 1 und 2.
**Figur 1** zeigt ein chematisches Schnittbild durch die Extrusionsanlage,
**Figur 2** zeigt eine bevorzugte Ausführungsform der Erfindung im Schnittbild.

### Ausführung der Erfindung

In der Folienextrusionsanlage gemäß Figur 1 dient ein herkömmlicher Extruder 1 zum Aufschmelzen eines thermoplastischen Kunststoffes. Die Kunststoffschmelze wird in die angeschlossene Breitschlitzdüse 2 eingespeist. Die extrudierte Schmelzebahn tritt im thermoplastischen Zustand in den Walzenspalt 4 zwischen den Glättwalzen 5 und 6 des Glättwerks 7 ein.

Zur absoluten Minimierung der in den Walzenspalt einlaufenden Dickenschwankungen über der Breite der Schmelzebahn, die zur Ausführung des Verfahrens von essentieller Bedeutung ist, sollte der über der Breite aus der Düse austretende Schmelzestrom über eine Messung der Wulstgröße wie sie z. B. im Griechischen Patent Nr. 85.420 bzw. im EP 0 429 161 beschrieben ist, oder über eine Messung der Doppelbrechung (siehe Gbm 92 12 406.2) geregelt werden.

Wenigstens eine und vorzugsweise jede Walze des Glättwerkes 7 wird mit einer Umfangsgeschwindigkeit angetrieben, die der gewünschten Abzugsgeschwindigkeit des Folienstranges entspricht. Die Glättwalzen 5 und 6 können zur Erzeugung einer glänzenden Folienoberfläche hochglanzpoliert sein. Sie können wahlweise auch eine mattierte oder strukturierte Oberfläche haben, um Folien mit der reziproken Oberflächenstruktur zu erzeugen. Der Begriff "Glättung" schließt im vorliegenden Rahmen jede Umwandlung der unkontrolliert gestörten Bahnoberfläche in eine gewünschte Oberflächenstruktur ein. Die Walzen werden mit einem durch ihre hohlen Achsen ein- und ausströmenden Kühlmittel auf eine unter der Erweichungstemperatur des thermoplastischen Kunststoffes liegende Temperatur temperiert

Die lichte Weite des Walzenspaltes 4 wird beim Betrieb der erfindungsgemäßen Extrusionsanlage durch die Dicke der einlaufenden Folienbahn selbsttätig eingestellt. Sie beträgt in der Regel 10 bis 500 Mikrometer. Während bei herkömmlichen Glättwerken die Achsen 8, 9 der Walzen 5, 6 starr und fest einstellbar am Maschinengestell gelagert sind, ist erfindungsgemäß wenigstens eine Walze 6 des Glättwerkes senkrecht zur Berührungsebene des Walzenspaltes in der Weise verschiebbar angeordnet, daß sie sich selbsttätig auf die Dicke der einlaufenden Folienbahn einstellt. Bei der Verschiebung ändert sich der Achsenabstand A zu der anderen Walze 5.

Unter einer "federnden Verschiebung" wird im Sinne der Erfindung verstanden, daß nach dem Verschwinden der verschiebenden Kraft, also beispielsweise nach dem Durchgang einer störungsbedingten Dickstelle der Bahn durch den Walzenspalt, die Walze wieder zurückkehrt und auf diese Weise dauernd mit der Bahn in Berührung bleibt. Der Begriff "federnd" beinhaltet hier nicht zwingend, daß die Spaltkraft mit der Größe der Verschiebung zunimmt. Wenn nicht gerade ein dicker Fremdkörper unbeabsichtigt in den Walzenspalt eingezogen wird, betragen die betriebsbedingten Achsenverschiebungen nur Bruchteile eines Millimeters. Auch wenn die Spaltkraft durch eine Federkraft erzeugt wird und dadurch die Zuhaltekraft mit zunehmender Verschiebung entsprechend der Federkonstanten zunimmt, kann sie bei den betriebsbedingten Verschiebungen als nahezu konstant angesehen werden.

Durch eine ausreichende Federlänge soll gewährleistet sein, daß die Spaltkraft - wenigstens bei Achsverschiebungen von nicht mehr als 0,5 mm - in einem Schwankungsbereich von +- 20% vorzugsweise +- 5%, insbesondere +- 2%, ausgehend vom Mittelwert, bleibt. Im Regelfall wird die Spaltkraft etwa gleichbleibend eingestellt. Spaltkräfte P im Bereich von 1 bis 100 N/cm sind im allgemeinen ausreichend, um einerseits eine befriedigende Glättung zu erreichen und andererseits bleibende Veränderungen der Walzenoberflächen auszuschließen. Vorzugsweise wird die Spaltkraft mit Mitteln erzeugt, die eine Einstellung auf wählbare Werte im obengenannten Bereich zuläßt.

Die zulässige Spaltkraft muß mit der Steifigkeit der Glättwalzen abgestimmt werden. Jedenfalls muß die Durchbiegung in der Walzenmitte in einem Bereich liegen, der im Verhältnis zur Spaltbreite bzw. zur Foliendicke vernachlässigbar ist. Bei vorgegebener Spaltkraft hängt die Stärke der Durchbiegung vom Durchmesser der Walzen und ihrer Länge sowie von ihrer Bauweise und vom Werkstoff ab. Da man mit deutlich geringeren Spaltkräften als bei herkömmlichen Glättwerken auskommt, können Walzen mit kleinen Durchmessern verwendet und ihre Lager und das Maschinengestell deutlich leichter ausgelegt werden. Das Breiten/Durchmesserverhältnis liegt vorzugsweise zwischen 5 und 20. Die Walzendurchmesser sollten <400 mm idealerweise <200 mm sein.

Es ist für die Zwecke der Erfindung nicht zwingend erforderlich, daß die federnd angeordneten Walzen stets achsparallel zu der anderen Walze verschoben werden. Wenn eine störungsbedingte Dickstelle nur auf einer Seite der Bahnbreite auftritt, braucht nur das Walzenlager an dieser stelle verschoben werden. Daher sind z. B. Pendelrollenlager für die Walzenlagerung geeignet. Gewünschtenfalls können die Walzenlager jedoch auch in der Weise gekoppelt werden, daß sie achsparallel verschoben werden.

Wenn Achsverschiebungen nur infolge von Rundlaufschwankungen einer Glättwalze auftreten, erreicht man mit der erfindungsgemäßen Vorrichtung eine höhere Gleichmäßigkeit der Foliendicke und -qualität, als wenn die Achsen starr gelagert sind. Achsverschiebungen aus anderen Ursachen, wie Dickstellen der einlaufenden Bahn, können zu quer über der Bahn verlaufenden Störungsstellen führen. Die Kosten eines dadurch bedingten Produktionsausschusses sind jedoch deutlich geringer als die Kosten für eine Betriebsunterbrechung und die Wiederherstellung einer beschädigten Walzenoberfläche.

Für die Ausführung der Erfindung eignen sich verschiedene mechanische Vorrichtungen. Eine bei jeder Achslage völlig gleichbleibende Spaltkraft wird erreicht, wenn die Achslager mit einer Gewichtskraft belastet werden, oder die Spaltkraft durch das Eigengewicht einer Walze erzeugt wird.

Die Lagerböcke 11, in denen die Achse 9 der verschiebbaren Glättwalze 6 gelagert sind, können auf Gleitschienen 12 verschiebbar montiert sein. Wichtig ist, daß sie reibungsarm verschiebbar sind, um die Bildung unzulässiger Spaltkräfte infolge von Reibungskräften auszuschließen. Beispielsweise können die Lagerböcke 11 auf Linearlagern gleiten.

Bei einer anderen Ausführungsform sind die Walzenlager 13 am freien Ende von Schwingarmen angeordnet, deren anderes Ende mit dem Drehgelenk 15 am Maschinengestell angebracht ist. Bei einer Bewegung der Schwingarme 14 ändert sich die lichte Weite des Walzenspaltes 4. Das Drehgelenk 15 kann auch durch eine Blattfeder ersetzt werden, die gleichzeitig die gewünschte Spaltkraft erzeugt.

Vorzugsweise wird die Spaltkraft mittels direkt auf die Achslager 11, 13 oder auf die Schwingarme 14 einwirkender Druckmittel 10 erzeugt. Bei den während des Betriebes auftretenden Achsenbewegungen, die in der Regel nicht mehr als 0,1 mm betragen, soll sich die von den Druckmitteln 10 erzeugte Kraft vorzugsweise um nicht mehr als +- 20% ändern.

Als Druckmittel eignen sich elastische Elemente mit ausreichend flacher Kennlinie, wie Spiralfedern, Blattfedern, Gaskolben aber auch konstante Gewichte, die an einem Hebelarm angeordnet sind und über diesen auf den Schwingarm 14 einwirken, oder die über Umlenkrollen mittels Zugseilen an den Achsenköpfen angreifen. Vorzugsweise sind diese Hub- oder Druckmittel auf verschiedene Spaltkräfte einstellbar ausgebildet, was sich bei elastischen Elementen durch die Vorspannung in der Grundstellung und bei Gegengewichten durch Vergrößern oder Verkleinern des Gewichtes auf einfache Weise bewerkstelligen läßt.

In besonderen Fällen kann es erwünscht sein, die Stellung der verschiebbaren Walze 6 nicht passiv durch die Einwirkung der Folienbahn, sondern aktiv über einen angetriebenen Bewegungsmechanismus zu verändern. Dabei können Kraftsensoren an den Achsenköpfen über eine besondere Regel- und Steuerungseinheit den Bewegungsmechanismus steuern.

Wenn das Glättwerk 7 mehr als zwei Glättwalzen und mehr als einen Walzenspalt enthält, so muß wenigstens der zuerst von der Bahn durchlaufende Walzenspalt im Sinne der Erfindung ausgebildet sein.

Vorzugsweise sind auch die nachfolgenden Walzenspalte in der gleichen Weise gestaltet.

Die erfindungsgemäße Vorrichtung eignet sich zur Verarbeitung aller gebräuchlichen thermoplastischen Kunststoffe für die Folienherstellung, wie thermoplastische Polyester, Polyolefine, Polyvinylclorid, Polystyrol, Polyacrylate, Polycarbonate oder Polysulfone.

Eine bevorzugte Ausführungsform des erfindungsgemäßen Glättwerks ist in Figur 2 dargestellt. Die eine Glättwalze 5 ist auf dem Seitenschild des Glättwerks 7 feststehend gelagert. Die Gegenwalze 6 ist auf Linearlagern 20 verschiebbar gelagert. Ihre Lagersteine 22 können mit einem hydraulischen bzw. pneumatischen Stempel 21, der auf dem Seitenschild des Glättwerks fest angeordnet ist, in eine Anfahr- und in eine Arbeitsstellung bewegt werden.

Durch eine Zugbewegung über die Glieder 26, 25, 27 wird der Lagerstein 22 in die Anfahrstellung des Glättwerks gebracht, bei der die Walzen 5 und 6 deutlich voneinander getrennt stehen. Sobald bei Beginn des Betriebes das vordere Ende der extrudierten Folienbahn 3 durch den Walzenspalt 4 hindurchgeführt worden ist, wird der Lagerstein 22 durch eine von dem Stempel 21 ausgehende Schubbewegung in seine Arbeitsstellung gebracht. Die erforderliche Spaltkraft wird durch die Vorspannung der Spiralfeder 23 erzeugt, deren Enden auf den Lagerstein 22 und auf die Lagerbuchse 24 einwirken. Die Spaltkraft läßt sich einstellen, indem die Spannmutter 25, an der sich die Lagerbuchse abstützt, auf dem Gewindestab 26 am Kopf des Kolbens des Stempels 21 vor- oder zurückgeschraubt wird.

Wenn im laufenden Betrieb in der Folienbahn 3 lokale Dickstellen auftreten, kann sich der Walzenspalt 4 unter entsprechender Komprimierung der Spiralfeder 23 öffnen. Nach Durchlaufen der Dickstelle kehrt die Walze 6 in ihre Sollstellung zurück.

## Patentansprüche

1. Vorrichtung zur Extrusion und Glättung von Kunststoffolien, enthaltend
A) einen Extruder (1) zur Extrusion von thermoplastischen Kunststoffen,
B) eine daran angeschlossene Breitschlitzdüse (2) und
C) ein Walzenglättwerk (17), das zur Aufnahme der extrudierten Folienbahn (3) wenigstens zwei einen Walzenspalt (4) bildende Glättwalzen (5, 6) enthält,
dadurch gekennzeichnet, daß wenigstens eine Walze (6) des Glättwerks (17) auf den Seitenschilden des Glättwerks (17) nahezu reibungsfrei verschiebbar gelagert ist und daß sie senkrecht zur Berührungsebene des Walzenspalts (4) unter Veränderung des Achsabstandes (A) zu der anderen Walze federnd angeordnet ist.

2. Vorrichtung nach Anspruch 1, dadurch gekennzeichnet, daß die Spaltkraft in einem von der Verschiebung der Achsen unabhängigen Schwankungsbereich von +- 20 % liegt.

3. Vorrichtung nach Anspruch 1, dadurch gekennzeichnet, daß die Spaltkraft etwa gleichbleibend eingestellt ist.

4. Vorrichtung nach Anspruch 1, dadurch gekennzeichnet, daß die auf die Spaltlänge bezogene Spaltkraft P1 bis 100 N/cm beträgt.

5. Vorrichtung nach einem oder mehreren der Ansprüche 1-4, dadurch gekennzeichnet, daß die Spaltkraft einstellbar ist.

## Claims

1. Apparatus for extruding and smoothing of plastic films consisting of
A) an extruder (1) to extrude thermoplastic materials,
B) a film die (2) connected thereto,
C) a smoothing roll mechanism (7) comprising at least two smoothing rolls (5, 6) forming an intermediary slit (4) to receive an extruded film web (3),
characterized in that
at least roll (6) of smoothing mechanism (7) is arranged in an elastic and movable way perpendicularly to the contact plane of the intermediary slit, thus modifying the distance A between the axes of the two rolls.

2. Apparatus according to Claim 1, characterized in that the pressure at the slit varies within a range of ± 20 % being independent on the axle shifting.

3. Apparatus according to Claim 1, characterized in that the slit pressure is adjusted to an almost constant size.

4. Apparatus according to Claim 1, characterized in that the slit pressure P1 in relation to the slit length does not exceed 100 N/cm.

5. Apparatus according to any one of the above Claims 1 to 4, characterized in that the pressure at the slit is adjustable.

## Revendications

1. Dispositif d'extrusion et de lissage de films de matière plastique, comprenant
A) une extrudeuse (1) pour l'extrusion de matières thermoplastiques,
B) une filière plate (2) raccordée à celle-ci, et
C) une calandre de lissage à cylindres (17) qui contient, pour recevoir la bande de film extrudée (3), au moins deux cylindres de lissage (5, 6) formant un intervalle de pinçage (4),
caractérisé en ce qu'au moins un cylindre (6) de la calandre de lissage (17) est monté de manière à pouvoir se déplacer presque sans frottement sur les flasques latéraux de la calandre de lissage (17) et en ce qu'il est monté de manière élastique perpendiculairement au plan de contact de l'intervalle de pinçage (4) lors de la modification de l'écart axial (A) vis-à-vis de l'autre cylindre.

2. Dispositif selon la revendication 1, caractérisé en ce que la force d'écartement se situe dans une plage de variation de +/- 20% indépendante du déplacement des axes.

3. Dispositif selon la revendication 1, caractérisé en ce que la force d'écartement est réglée de manière à rester plus ou moins la même.

4. Dispositif selon la revendication 1, caractérisé en ce que la force d'écartement P1 par rapport à la longueur d'écartement atteint jusqu'à 100 N/cm.

5. Dispositif selon une ou plusieurs des revendications 1 à 4, caractérisé en ce que la force d'écartement est réglable.
